# EUROPEAN PATENT APPLICATION

(11) **EP 4 763 028 A1**
(43) Date of publication of application: **24.06.2026**
(21) Application number: 24868509.1
(22) Date of filing: 27.08.2024
(51) Int. Cl.: A47L 11/40

(54) **ROBOT CLEANER AND CLEANING METHOD THEREOF**

(30) Priority: 22.09.2023 KR 20230127447
(71) Applicant: Samsung Electronics Co., Ltd., Suwon-si, Gyeonggi-do 16677 (KR)
(72) Inventor: KIM, Injoo, Suwon-si Gyeonggi-do 16677 (KR); KIM, Kyongsu, Suwon-si Gyeonggi-do 16677 (KR); KIM, Yeonwoo, Suwon-si Gyeonggi-do 16677 (KR); KIM, Hankyeol, Suwon-si Gyeonggi-do 16677 (KR); SHIN, Dongmin, Suwon-si Gyeonggi-do 16677 (KR); JEONG, Sungnam, Suwon-si Gyeonggi-do 16677 (KR); CHAE, Sangwuk, Suwon-si Gyeonggi-do 16677 (KR); HONG, Junu, Suwon-si Gyeonggi-do 16677 (KR)
(74) Representative: Gulde & Partner
(86) International application number: PCT/KR2024/012811
(87) International publication number: WO 2025/063530

(57) **Abstract**

A robot cleaner is disclosed. The present robot cleaner includes: a driving unit for moving the position of the robot cleaner; a suction unit for vacuuming foreign substances; a wet cleaning module for performing wet cleaning; at least one sensor; a battery; a memory; and a processor, wherein the processor: controls the driving unit and the suction unit to perform dry cleaning while moving within a space in which the robot cleaner is positioned; generates a map for the space on the basis of a sensing value sensed by the at least one sensor during the drying cleaning and stores the map in the memory; identifies an area on which wet cleaning is possible in the map and calculates an estimated battery consumption amount when the wet cleaning is performed on the identified area; and compares the remaining amount of the battery and the estimated battery consumption amount and determines whether to perform the wet cleaning.

## Description

### [Technical Field]

The present disclosure relates to a robot cleaner and a cleaning method thereof, and more particularly, to a robot cleaner capable of performing cleaning using a map and a cleaning method thereof.

### [Background Art]

Recently, use of robot cleaners in households has been increasing. Conventional robot cleaners were limited to dry cleaning, vacuuming foreign substances. However, in recent years, robot cleaners capable of performing not only such dry cleaning but also what is referred to as wet cleaning of cleaning a floor using a wet mop or the like have been developed and distributed.

Recent robot cleaners capable of performing both dry cleaning and wet cleaning may be implemented to perform wet cleaning immediately while performing dry cleaning. However, there is a difference between a floor surface on which dry cleaning is possible and a floor surface on which wet cleaning is possible. For example, when a carpet is laid, dry cleaning is possible on the carpet, whereas when wet cleaning is performed, problems may occur such as the carpet becoming wet or the robot cleaner being entangled with a wet mop and stopping traveling.

Accordingly, a need has arisen for a technology allowing a robot cleaner to efficiently perform dry cleaning and wet cleaning.

### [Disclosure of Invention]

### [Solution to Problem]

According to an embodiment of the present disclosure, provided is a robot cleaner including: a driving unit configured to move a position of the robot cleaner; a vacuum unit configured to vacuum foreign substances; a wet cleaning module configured to perform wet cleaning; at least one sensor; a battery; a memory; and a processor, wherein the processor is configured to: control the driving unit and the vacuum unit to perform dry cleaning while moving within a space in which the robot cleaner is positioned; generate a map for the space on the basis of a sensing value sensed by the at least one sensor during drying cleaning, and store the map in the memory; identify a region in which wet cleaning is possible in the map, and calculate an estimated battery consumption amount when wet cleaning is performed for the identified region; and compare the remaining amount of the battery with the estimated battery consumption amount to determine whether to perform wet cleaning.

According to an embodiment of the present disclosure, provided is cleaning method of a robot cleaner, the method including: performing dry cleaning while moving within a space in which the robot cleaner is positioned, and generating a map for the space on the basis of a sensing value sensed by at least one sensor included in the robot cleaner; identifying a region in which wet cleaning is possible in the map; and calculating an estimated battery consumption amount when wet cleaning is performed for the identified region, and comparing the remaining amount of the battery with the estimated battery consumption amount to determine whether to perform wet cleaning.

According to an embodiment of the present disclosure, provided is a computer-readable recording medium including a program for executing a cleaning method of a robot cleaner, wherein the method includes performing dry cleaning while moving within a space in which the robot cleaner is positioned, and generating a map for the space on the basis of a sensing value sensed by at least one sensor included in the robot cleaner; identifying a region in which wet cleaning is possible in the map; and calculating an estimated battery consumption amount when wet cleaning is performed for the identified region, and comparing the remaining amount of the battery with the estimated battery consumption amount to determine whether to perform wet cleaning.

### [Brief Description of Drawings]

FIG. 1 is a view illustrating an operation of a robot cleaner according to at least one embodiment of the present disclosure.
FIG. 2 is a block diagram illustrating a configuration of the robot cleaner according to at least one embodiment of the present disclosure.
FIG. 3 is a view illustrating a method for generating a map by the robot cleaner according to at least one embodiment of the present disclosure.
FIG. 4 is a view illustrating a method for verifying map validity by the robot cleaner according to at least one embodiment of the present disclosure.
FIG. 5 is a view illustrating a configuration of the robot cleaner according to at least one embodiment of the present disclosure.
FIG. 6 is a view illustrating a method for lifting up a wet cleaning module by the robot cleaner according to at least one embodiment of the present disclosure.
FIGS. 7, 8, and 9 are views illustrating a method for moving in a restricted region by the robot cleaner according to at least one embodiment of the present disclosure.
FIGS. 10 and 11 are views illustrating a method for setting a safe region by the robot cleaner according to at least one embodiment of the present disclosure.
FIG. 12 is a flowchart illustrating a method for determining whether to perform wet cleaning by the robot cleaner according to at least one embodiment of the present disclosure.
FIG. 13 is a flowchart illustrating a method for determining whether to use a stored map during a wet cleaning operation by the robot cleaner according to at least one embodiment of the present disclosure.
FIG. 14 is a flowchart illustrating a method for pass-through traveling in a restricted region by the robot cleaner according to at least one embodiment of the present disclosure.

### [Mode for Invention]

Hereinafter, embodiments of the present disclosure are described in detail with reference to the accompanying drawings.

General terms currently widely used are selected as terms used in the embodiments of the present disclosure in consideration of their functions in the present disclosure, and may be changed based on the intentions of those skilled in the art or a judicial precedent, the emergence of a new technique, or the like. In addition, in a specific case, terms arbitrarily selected by an applicant may be present. In this case, the meanings of such terms are mentioned in detail in corresponding descriptions of the present disclosure. Therefore, the terms used in the present disclosure need to be defined on the basis of the meanings of the terms and the contents throughout the present disclosure rather than simple names of the terms.

In the specification, the expression such as "have," "may have," "include," or "may include," indicates the presence of a corresponding feature (e.g., a numerical value, a function, an operation, or a component such as a part), and does not exclude the presence of an additional feature.

An expression such as "at least one of A or/and B" may indicate either "A or B," or "both of A and B."

Expressions such as "first" and "second," used in the present disclosure may indicate various components regardless of the sequence or importance of the components. The expression is used only to distinguish one component from another component, and does not limit the corresponding component.

When any component (e.g., a first component) is mentioned to be "(operatively or communicatively) coupled with/to" or "connected to" another component (e.g., a second component), it should be understood that the any component is directly coupled to another component or may be coupled to another component through yet another component (e.g., a third component).

A term of a singular number may include its plural number unless explicitly indicated otherwise in the context. It should be understood that in this application, terms such as "include" or "have" indicate that the presence of the features, numbers, steps, operations, components, parts, or combinations thereof, which are described in the specification, and do not preclude the presence or addition of one or more other features, numbers, steps, operations, components, parts, or combinations thereof.

In the present disclosure, a "module" or a "part" may perform at least one function or operation, and be implemented by hardware or software or be implemented by a combination of hardware and software. In addition, a plurality of "modules" or a plurality of "parts" may be integrated in at least one module and be implemented by at least one processor (not shown) except for a "module" or a "part" that needs to be implemented by specific hardware.

In the specification, a term such as a "user" may refer to a person who uses an electronic apparatus or an apparatus (e.g., an artificial intelligence electronic apparatus) which uses an electronic apparatus.

Hereinafter, an embodiment of the present disclosure is described in more detail with reference to the accompanying drawings.

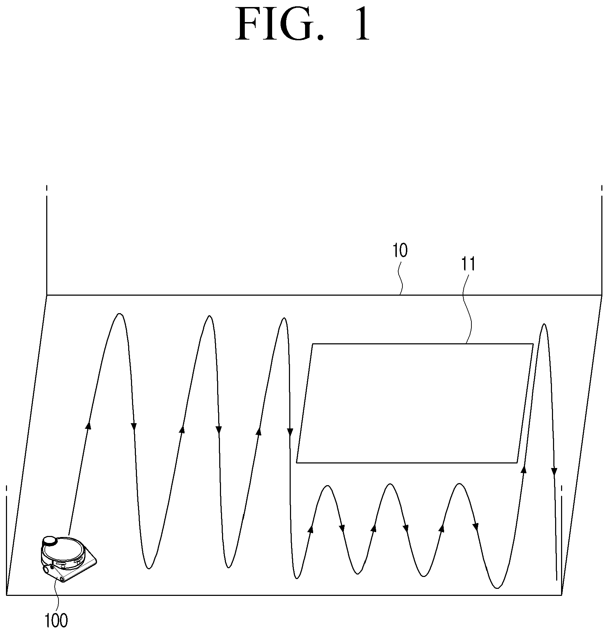

FIG. 1 is a view illustrating an operation of a robot cleaner according to at least one embodiment of the present disclosure.

Referring to FIG. 1, a robot cleaner 100 may perform cleaning while traveling within a space 10 in which the robot cleaner 100 is positioned. The space 10 may correspond to a general household, is not limited thereto, and may correspond to various environments such as offices, buildings, or public facilities.

The robot cleaner 100 may include both a configuration (not shown) for performing dry cleaning and a component for performing wet cleaning. Dry cleaning refers to cleaning performed by vacuuming air through a vacuum port disposed on a surface to be cleaned, that is, a surface adjacent to a floor surface, and vacuuming foreign substances together. The foreign substances may include dust, trash, and other cleaning targets present on the surface to be cleaned.

Wet cleaning refers to cleaning performed by wiping a floor surface while the robot cleaner 100 travels in a state in which a wet pad such as a wet mop or a wet tissue is in contact with the floor surface. Depending on a product type, the robot cleaner 100 may fix a part to which the wet pad is attached to bring the part into close contact with the floor surface, or may rotate or reciprocate the part to increase intensity applied to the floor surface.

The robot cleaner 100 may perform wet cleaning after performing dry cleaning. The robot cleaner 100 may generate a map for the space 10 by collecting and analyzing a sensing value sensed by a sensor included in the robot cleaner 100 during performing dry cleaning. Specifically, the robot cleaner 100 may collect various types of information on the size, shape, state, or the like of the floor surface within the space 10 while moving within the space 10 using at least one sensor. For example, when a carpet 11 is present in the space 10, the robot cleaner 100 may identify a region of the carpet 11 using the sensor while performing dry cleaning. The carpet 11 may have carpet fibers protruding from a floor, and the robot cleaner 100 may thus identify the region of the carpet 11 using an image sensor capturing a front side, a front lower side, or a lower side.

When the region of the carpet 11 is recognized, the robot cleaner 100 may identify the region of the carpet 11 as a restricted region 20 in which wet cleaning is not possible.

As described above, the robot cleaner 100 may generate the map by classifying the space 10 in which the robot cleaner 100 is positioned into a wet-cleaning possible region and a restricted region. The restricted region may correspond to a region in which an object for which wet cleaning is difficult, such as the carpet 11, is laid, or a region in which an object not to become wet, such as a cushion, a wire, or a mat, is disposed.

When the map is generated, the robot cleaner 100 may perform wet cleaning on the basis of the map. The robot cleaner 100 may set a traveling path for remaining areas excluding the restricted region in which wet cleaning is difficult, and may perform wet cleaning while traveling along the traveling path.

In this case, the robot cleaner 100 may first determine whether the remaining amount of a battery is sufficient to perform wet cleaning for all of the remaining areas, and may determine whether to perform wet cleaning based on a determination result. For example, the robot cleaner 100 may start wet cleaning immediately from a point at which dry cleaning is completed when it is determined that the remaining amount of the battery is sufficient. On the other hand, when it is determined that the remaining amount of the battery is insufficient, the robot cleaner 100 may move to a charging station and perform battery charging. The robot cleaner 100 may start wet cleaning when the battery is fully charged, or when it is determined that the battery is charged to a level sufficient for the robot cleaner 100 to perform wet cleaning even before full charging.

The robot cleaner 100 may store the generated map and may reutilize the map later. The robot cleaner 100 may identify a change in the map by cumulatively comparing previously generated maps with newly generated maps. For example, the robot cleaner 100 may determine a frequency at which a change in the position, shape, size, or the like of the restricted region 20 occurs in the map. When it is determined that the change does not occur frequently, the robot cleaner 100 may set a long map generation cycle. On the other hand, when it is determined that the change occurs frequently, the robot cleaner 100 may set a short map generation cycle. For example, the robot cleaner 100 may generate the map at every cleaning.

In addition, the robot cleaner 100 may perform various operations based on the map. Hereinafter, operations of the robot cleaner 100 according to various embodiments are described in detail.

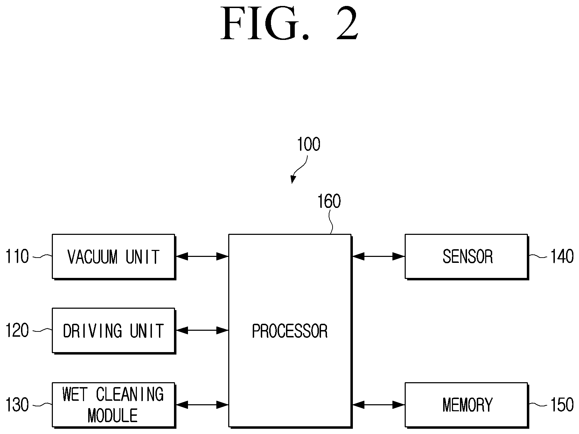

FIG. 2 is a block diagram illustrating a configuration of the robot cleaner according to at least one embodiment of the present disclosure.

Referring to FIG. 2, the robot cleaner 100 may include a vacuum unit 110, a driving unit 120, a wet cleaning module 130, a sensor 140, a memory 150, and a processor 160.

The vacuum unit 110 is a component for performing dry cleaning by vacuuming foreign substances. The vacuum unit 110 may include various components for vacuuming foreign substances through air, such as a vacuum motor, a vacuum fan, a dust container, an air passage, and a vacuum opening. A detailed configuration of the vacuum unit 110 may be variously modified depending on a type of the robot cleaner, a manufacturer, a product model, or the like.

The driving unit 120 is a component for moving a body of the robot cleaner 100. The driving unit 120 may include at least one wheel, at least one shaft, at least one motor, or the like. Based on driving of the driving unit 120, the robot cleaner 100 may perform forward movement, backward movement, rotation, direction change, or the like. The driving unit 120 may be operated to allow the robot cleaner 100 to travel in a zigzag pattern as illustrated in FIG. 1, and to also travel in various patterns according to a user setting or a predetermined traveling path.

The wet cleaning module 130 is a component for performing the above-described wet cleaning. The wet cleaning module 130 may include a pad attachment part to which a pad is attachable, a rotation motor for rotating the pad attachment part, a lift-up structure for lifting the pad attachment part from the floor surface, and the like. Wet cleaning performed by rotating a wet mop pad of the wet cleaning module 130 is merely an example, and the wet cleaning module 130 may also be implemented to perform wet cleaning while fixing, vibrating, or reciprocating the pad.

The sensor 140 is a component for sensing various types of information related to an operation of the robot cleaner 100. On the basis of sensing values sensed by the sensor 140, the robot cleaner 100 may identify various types of information such as position information regarding the space in which the robot cleaner 100 is positioned, information on an object present in the space, and information on the floor surface.

For example, the sensor 140 may include a light detection and ranging (LiDAR) sensor. The LiDAR sensor may be positioned on an upper end of the robot cleaner 100. The LiDAR sensor may emit laser beams while rotating 360 degrees with respect to the space in which the robot cleaner 100 is positioned. When laser beams are reflected from an object around the robot cleaner 100 and received again by the LiDAR sensor, the LiDAR sensor may measure a distance to the object on the basis of a reception time, and may generate data points of a surrounding environment by performing such distance measurement in various angles and directions. The data points may be generated in a form of a point cloud. Each point may include information on coordinate values. In this case, the point cloud may generally include information on two-dimensional coordinate values, and may also include information on three-dimensional coordinate values.

The processor 160 may analyze point cloud data and may generate a two-dimensional (2D) map or a three-dimensional (3D) map for the space in which the robot cleaner 100 is positioned. However, the present disclosure is not limited to this example, and the sensor 140 may generate the map by using various known methods.

In addition, the sensor 140 may include an ultrasonic sensor. The ultrasonic sensor may be positioned on a lower portion of the robot cleaner 100. The ultrasonic sensor may emit ultrasonic waves toward the floor surface on which the robot cleaner 100 travels, and may receive ultrasonic waves reflected from the floor surface and then returned to the ultrasonic sensor. The processor 160 may determine a material of the floor by analyzing the amount, reflection intensity, spectrum, or the like of the reflected ultrasonic waves. For example, when the processor 160 pre-learns an ultrasonic reflection pattern of the carpet and stores the ultrasonic reflection pattern in the memory 150, the processor 160 may detect that the robot cleaner 100 is passing over the carpet based on the amount, reflection intensity, spectrum, or the like of ultrasonic waves received from the sensor 140. However, the sensor 140 is not limited to the above-described LiDAR sensor and ultrasonic sensor, and may include various types of sensors capable of collecting and analyzing data on the space in which the robot cleaner 100 is positioned. For example, the sensor 140 may further include an infrared sensor, an image sensor, a three-dimensional (3D) camera, or the like.

The processor 160 may recognize the position of the robot cleaner 100 within the space by using the LiDAR sensor, and may recognize surrounding terrain or objects on the basis of images captured by the image sensor or the three-dimensional camera at the position. In addition, the processor 160 may identify a feature of the floor surface on the basis of a sensing value sensed by the infrared sensor or another sensor. The processor 160 may integrate the identified information to generate a map including various types of information such as the shape or area of an entire space, the positions and shapes of various home appliances or furniture in the space, and the positions and shapes of rooms, living rooms, or bathrooms. The memory 150 is a component for storing various data, programs, instructions, or the like required for an operation of the robot cleaner 100. The memory 150 may be implemented as at least one of a dynamic random access memory (DRAM), a static random access memory (SRAM), a synchronous dynamic random access memory (SDRAM), a one time programmable read only memory (OTPROM), a programmable read only memory (PROM), an erasable and programmable read only memory (EPROM), an electrically erasable and programmable read only memory (EEPROM), a mask read only memory (mask ROM), a flash read only memory (flash ROM), a flash memory (e.g., NAND flash or NOR flash), a hard drive, a solid state drive (SSD), an external hard drive, or a universal serial bus (USB) stick memory. Although FIG. 2 illustrates the memory 150 as a component separate from the processor 160, in some embodiments, all or part of the memory may be integrated into the processor 160 and implemented as one component.

The memory 150 may store a map for the space in which the robot cleaner 100 is positioned. As described above, when the robot cleaner 100 performs dry cleaning, the processor 160 may store a map generated during dry cleaning in the memory 150. The memory 150 may also store the previously generated maps together.

The processor 160 may control overall operations of the robot cleaner 100. Specifically, the processor 160 may be connected to the vacuum unit 110, the driving unit 120, the wet cleaning module 130, the sensor 140, and the memory 150, and may control the overall operations of the robot cleaner 100 by executing at least one instruction stored in the memory 150.

The processor 160 may be implemented as a digital signal processor (DSP), a microprocessor, or a timing controller (TCON) for processing digital signals. However, the present disclosure is not limited thereto, and the processor 160 may include at least one of a central processing unit (CPU), a micro controller unit (MCU), a micro processing unit (MPU), a controller, an application processor (AP), a communication processor (CP), an advanced reduced instruction set computer (RISC) machines (ARM) processor, or an artificial intelligence (AI) processor, or may be defined by such terms. In addition, the processor 160 may be implemented as a system-on-chip (SoC) or a large scale integration (LSI) in which a processing algorithm is embedded, or may be implemented in a form of a field programmable gate array (FPGA). The processor 160 may perform various functions by executing computer executable instructions stored in the memory.

When a method according to various embodiments of the present disclosure includes a plurality of operations, the plurality of operations may be performed by one processor or may be performed by a plurality of processors. The processor 160 may be implemented as a single-core processor including a single core, or may be implemented as at least one multicore processor including multiple cores (e.g., homogeneous multiple cores or heterogeneous multiple cores).

When a cleaning start command is input or when an event requiring the start of cleaning occurs (e.g., when a predetermined cleaning time arrives or when contamination is detected in the space), the processor 160 may perform cleaning by controlling the vacuum unit 110, the driving unit 120, and the sensor 140.

For example, when a user inputs a command instructing the robot cleaner 100 to perform dry cleaning, the processor 160 may load the map stored in the memory 150 and set a traveling path for performing dry cleaning. When there is no pre-stored map, the processor 160 may control the vacuum unit 110 and the driving unit 120 to perform cleaning while moving in one direction from a position where the robot cleaner 100 is initially placed. When traveling in a corresponding direction and approaching a wall surface or another obstacle, the processor 160 may control the driving unit 120 to perform a direction change. While sequentially cleaning the entire space 10 in this manner, the processor 160 may collect the sensing values sensed by the sensor 140 to generate the map as described above and store the map in the memory 150.

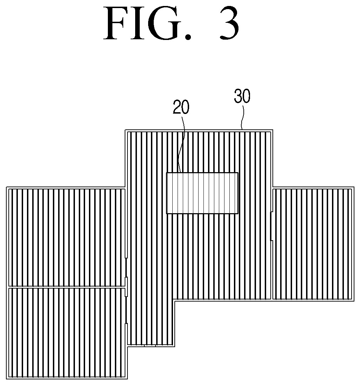

FIG. 3 illustrates an example of the map generated by the processor 160. While the robot cleaner 100 travels, the processor 160 may identify and record the position and traveling path of the robot cleaner 100 on the basis of the value sensed by the LiDAR sensor, the infrared sensor, or a vision sensor included in the robot cleaner 100, and may generate the map by connecting recorded points to each other. For example, the robot cleaner 100 may identify coordinate values of a space through which the robot cleaner 100 currently passes by using the LiDAR sensor, and may recognize the presence of a carpet, a wall, or the like near the coordinates by using a lower sensor of the robot cleaner 100. For example, when the robot cleaner 100 travels at one point in a region in which a carpet is present, the robot cleaner 100 may identify coordinate values (22, -8) of the point by using the LiDAR sensor, and may recognize that the carpet is present on a floor surface of the point by using the lower sensor. By recognizing and storing such information, the robot cleaner 100 may obtain information on all regions of the space in which the robot cleaner 100 is positioned, and may generate a map 30 by classifying the wet-cleaning possible region and the restricted region 20.

Referring to FIG. 3, the map 30 may represent not only information on the positions, shapes, and sizes of rooms or living rooms included in the space 10, and the positions, shapes, sizes, or the like of various home appliances or furniture placed in the space 10, but also the positions, shapes, sizes, or the like of the restricted region 20. Although FIG. 3 illustrates the two-dimensional map, the map may be implemented in the form of a three-dimensional (3D) map when the robot cleaner 100 includes the image sensor or the like.

After dry cleaning is completed, the processor 160 may analyze information obtained during dry cleaning and the generated map without immediately performing wet cleaning. For example, the processor 160 may identify the wet-cleaning possible region excluding the restricted region 20 in the space in which the robot cleaner 100 is positioned. In addition, the processor 160 may calculate an estimated battery consumption amount to be consumed when wet cleaning is performed for the wet-cleaning possible region.

In this case, the processor 160 may calculate the estimated battery consumption amount based on statistical data stored in the memory 150. The memory 150 may store battery consumption amounts consumed when the robot cleaner 100 performs wet cleaning for a predetermined area. For example, the memory 150 may store data indicating that when the robot cleaner 100 performed wet cleaning for an entire area (40m²) of a house, a total of 60 minutes was required and a total of 30% of battery capacity was consumed.

That is, the processor 160 may obtain data for a wet cleaning area A, a wet cleaning required time T, and a battery consumption amount C through wet cleaning, and may store the data in the memory 150. When a map is generated and area A of the wet-cleaning possible region in an entire area in the map is identified, the processor 160 may estimate the estimated battery consumption amount C to be consumed when wet cleaning is performed for the area on the basis of the data stored in the memory 150. The processor 160 may compare the calculated estimated battery consumption amount with the remaining amount of the battery included in the robot cleaner 100 to determine whether to perform wet cleaning. That is, the processor 160 may determine that the robot cleaner 100 performs wet cleaning without battery charging when the remaining amount of the battery is greater than the estimated battery consumption amount, and the processor 160 may determine that the robot cleaner 100 performs wet cleaning after charging the battery when the estimated battery consumption amount is greater than the remaining amount of the battery.

For example, when the remaining amount of the battery included in the robot cleaner 100 after the completion of dry cleaning is 50% and the estimated battery consumption amount calculated by the processor 160 is 30%, the processor 160 may control the driving unit 120 to allow the robot cleaner 100 to immediately perform wet cleaning without returning to the battery charging station. However, when the remaining amount of the battery included in the robot cleaner 100 after the completion of dry cleaning is 20% and the estimated battery consumption amount calculated by the processor 160 is 30%, the processor 160 may control the driving unit 120 to allow the robot cleaner 100 to return to the battery charging station.

Although the above description describes only the operation for determining whether to immediately perform wet cleaning by comparing only magnitudes of the remaining amount of the battery with the estimated battery consumption amount thereof, the present disclosure is not limited thereto, and even though the remaining amount of the battery is greater than the estimated battery consumption amount, when a difference between the remaining amount of the battery and the estimated battery consumption amount is equal to or less than a predetermined value (e.g., 10% or less), the robot cleaner 100 may be controlled to return to the battery charging station, and the predetermined value may be arbitrarily set by the user or the processor 160.

The processor 160 may control battery charging of the robot cleaner 100 performed before wet cleaning to perform charging until a battery amount of the robot cleaner 100 reaches at least the estimated battery consumption amount. For example, when the estimated battery consumption amount for wet cleaning is 30%, rather than waiting until the battery of the robot cleaner 100 is fully charged to 100%, the processor 160 may control the driving unit 120 and the wet cleaning module 130 to allow wet cleaning to be immediately performed when the battery is charged to about 40%.

If the robot cleaner 100 waits until the battery is fully charged to 100%, a time interval between dry cleaning and wet cleaning may increase, and foreign substances may thus occur again on the surface to be cleaned before wet cleaning, thereby making efficient wet cleaning difficult. Therefore, when it is identified that the battery is charged to at least the estimated battery consumption amount, the processor 160 may control wet cleaning to be performed even before the battery is fully charged.

When it is determined that wet cleaning is possible, the processor 160 may control the driving unit 120, the wet cleaning module 130, and the sensor 140 to start wet cleaning. The processor 160 may set a wet cleaning path on the basis of the map stored in the memory 150. The processor 160 may control the motor and wheel of the driving unit to allow the robot cleaner 100 to travel along the set path, and control the motor of the wet cleaning module 130 to rotate or vibrate the wet mop pad to wipe the surface to be cleaned. In addition, even during wet cleaning, the processor 160 may perform wet cleaning by driving the sensor 140 in addition to using the map stored in the memory 150 to recheck whether the surface to be cleaned belongs to the restricted region 20 in which wet cleaning is restricted.

Meanwhile, the processor 160 may cumulatively store the previously generated maps in the memory 150. The processor 160 may compare the plurality of maps stored in the memory 150 to each other to determine the frequency and level of change in the position, area, or shape of the restricted region 20 is changed. Hereinafter, a level to which the restricted region 20 is changed is referred to as a change amount.

When the change amount is calculated, the processor 160 may perform various control operations on the basis of the change amount.

For example, the processor 160 may determine a map update cycle on the basis of the change amount. That is, when the restricted region frequently changes, the processor 160 may set a short update cycle. As the shortest cycle, the processor 160 may set the update cycle to generate a map and use the map at every dry cleaning. On the other hand, when it is determined that the restricted region does not frequently change, the processor 160 may set a long update cycle. Here, the update cycle may be regarded as a validity period during which the generated map is usable. For example, when the update cycle is set to one month, the processor 160 may generate the map by using the sensor at a one-month cycle. The processor 160 may use the map stored in the memory 150 during a validity period of one month until a next update cycle arrives.

In another example, the processor 160 may determine whether to use the sensor during cleaning on the basis of the change amount. That is, when the restricted region frequently changes, the processor 160 may use both the map and the sensor 140 when performing wet cleaning. If the restricted region frequently changes, the processor 160 may thus recheck whether wet cleaning is possible on the basis of the sensing value sensed by the sensor 140 even when the robot cleaner 100 reaches a point marked as the restricted region 20 in the currently stored map. If the restricted region does not frequently change, the processor 160 may use only the map when performing wet cleaning, or may intermittently activate and use the sensor 140.

The processor 160 may calculate the above-described change amount by comparing the plurality of cumulatively stored maps. The change amount may be determined according to various criteria.

For example, when a plurality of maps are compared with each other, the processor 160 may recognize, as a change amount, a ratio of times in which a position of the restricted region differs by an error range or more. When the total number of maps stored in the memory 150 is n, the processor 160 may compare the respective maps in chronological order to calculate the number of times in which the position, area, or shape of the restricted region differs by the error range or more. The processor 160 may calculate a ratio of changes occurring based on the total number of maps and the number of changes. When the calculated ratio is equal to or less than a predetermined reference value (e.g., 10%), the processor 160 may determine that a change in the restricted region is not significant. On the other hand, when the calculated ratio exceeds the reference value, the processor 160 may determine that a change in the restricted region is significant.

As described above, when the processor 160 determines the update cycle on the basis of the change amount, the processor 160 may set the update cycle to be shorter based on a level to which the change ratio exceeds the reference value. For example, when the change ratio is calculated as 50%, the processor 160 may set the update cycle to generate the map once every two cleanings.

In addition, when determining whether to operate the sensor on the basis of the change amount, when the change amount is less than the reference value, the processor 160 may perform wet cleaning on the basis of the map in a state in which the LiDAR sensor is activated, while controlling the sensor for sensing the floor surface, the image sensor, the three-dimensional (3D) camera, or the like to be turned off or activated only at predetermined time intervals. When the change amount is greater than the reference value, the processor 160 may perform wet cleaning by using both the sensor and the map.

In another example, the processor 160 may set the update cycle based on the number of maps changed among a predetermined number of recently generated maps. For example, when a total of five maps are compared with one another, the change amount may be calculated as one in a case in which positions of restricted regions in first and second maps are identical to each other and positions of restricted regions in third, fourth, and fifth maps are identical to one another, and only positions of restricted regions in the second and the third maps differ. When a reference value is set to two, this case corresponds to a case in which the change amount is less than the reference value. On the other hand, when it is determined that positions of the restricted regions differ at least three times in the first to fifth maps, the processor 160 may determine that the change amount is greater than the reference value.

Alternatively, the change amount may be calculated as a difference between the position, area, or shape of the restricted region in a previous map and the position, area, or shape of the restricted region in a current map. That is, the change amount may be calculated as a distance difference between a reference point of a previous restricted region (e.g., a lower left corner point) and a reference point of a current restricted region. In this case, when it is assumed that a reference value is 50cm and a change amount is 80cm, the processor 160 may determine that the change amount is greater than the reference value.

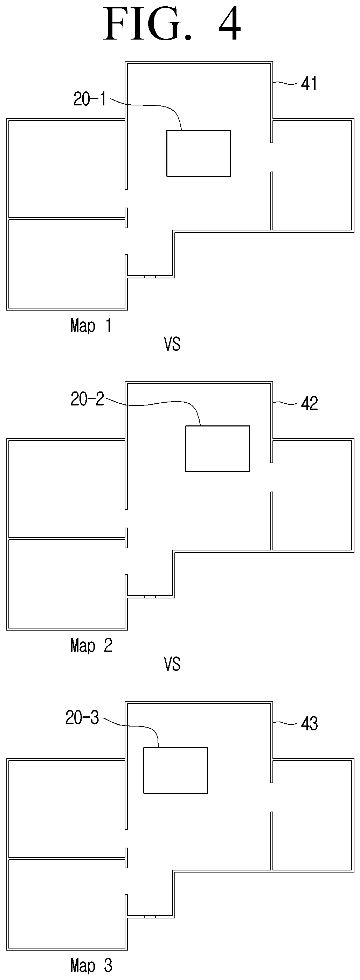

FIG. 4 illustrates examples of a plurality of maps stored in the robot cleaner 100. FIG. 4 illustrates three maps 41, 42, and 43 generated at different times.

The processor 160 may generate a plurality of maps through a plurality of dry cleaning operations and store the maps in the memory 150. In this case, the positions and areas of restricted regions determined to restrict wet cleaning in the plurality of maps may slightly differ.

Referring to FIG. 4, it may be seen that positions of a restricted region 20-1 in the first map 41, a restricted region 20-2 in the second map 42, and a restricted region 20-3 in the third map 43 differ each time. In such a case, the processor 160 may calculate a change amount of the restricted region as two, or may calculate the change amount as a ratio such as 100% because the change is detected every time.

Alternatively, the processor 160 may identify an area of a common portion by comparing the positions and areas of the restricted regions 20-1, 20-2, and 20-3 in the respective maps 41, 42, and 43. When a difference between the area of the common portion and an area of a single restricted region is not large, the processor 160 may utilize all the three maps when performing fourth wet cleaning.

That is, when an area of a single restricted region is 10m² and an area of the common portion among the three restricted regions 20-1, 20-2, and 20-3 is 8m², the processor 160 may determine that the restricted region is not significantly changed. In this case, the processor 150 may recognize a combined entire region of the three restricted regions 20-1, 20-2, and 20-3 as the restricted region, and may perform the fourth wet cleaning.

On the other hand, in the above-described example, when an area of the common portion among the three restricted regions 20-1, 20-2, and 20-3 is 2m², which is equal to or less than a reference value (e.g., 5m²), the processor 160 may determine that positions of the restricted regions are frequently changed, and during the fourth wet cleaning, may perform wet cleaning by generating a new map or by driving the sensor 140 of the robot cleaner 100 to individually check the floor surface, without using the three stored maps.

Although FIG. 4 illustrates a situation in which the total of three maps are stored, the present disclosure is not limited thereto, and even when three or more maps are stored, a change amount of restricted regions may be calculated for a plurality of stored maps to determine whether to utilize the plurality of maps during wet cleaning.

In addition, although FIG. 4 illustrates a situation in which only positions of restricted regions change without a change in areas of the restricted regions, even when the areas of the restricted regions change as well as the positions thereof, an area change amount may be calculated to determine whether to utilize a plurality of maps during wet cleaning.

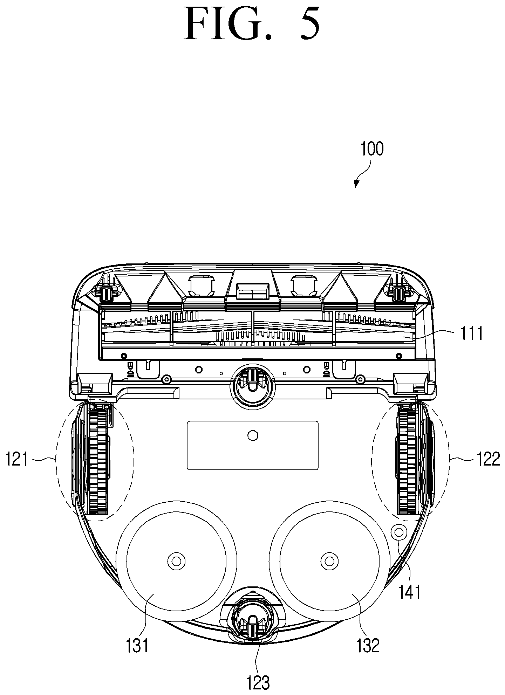

FIG. 5 is a view illustrating an example of a lower configuration of the robot cleaner according to at least one embodiment of the present disclosure.

Referring to FIG. 5, a lower portion of the robot cleaner 100 may include a vacuum opening 111, wheels 121, 122, and 123, pad attachment parts 131 and 132, and a floor detection sensor 141. The vacuum opening 111 corresponds to an opening for vacuuming foreign substances. The vacuum opening 111 may be connected to an air passage leading to the dust container disposed inside the robot cleaner 100. When a vacuuming force is generated by the vacuum motor and the vacuum fan, foreign substances on the surface to be cleaned may be vacuumed through the vacuum opening 111 and introduced into the dust container.

The wheels 121, 122, and 123 are components for allowing the robot cleaner 100 to travel. The partial wheel 123 among the wheels 121, 122, and 123 may be implemented to reduce a frictional force occurring on a lower surface regardless of driving of the motor, and is not necessarily limited thereto.

The pad attachment parts 131 and 132 are components to which pads for wet cleaning are detachably attachable. FIG. 5 illustrates a case in which two pad attachment parts 131 and 132 are implemented to be independently rotatable. However, as described above, the pad attachment parts may be implemented in various forms.

The floor detection sensor 141 corresponds to a sensor for detecting a floor surface below the robot cleaner. For example, the floor detection sensor 141 may use an infrared sensor, and the present disclosure is not limited thereto.

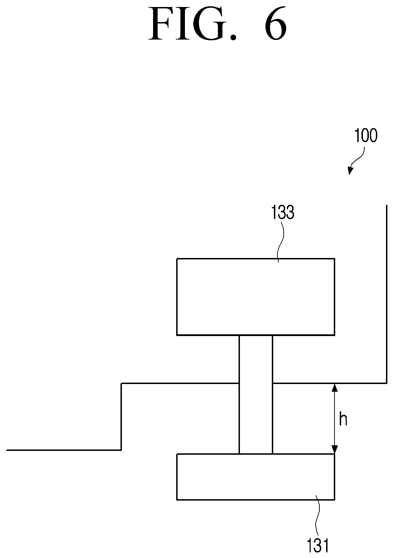

FIG. 6 is a view illustrating a method for lifting up the wet cleaning module by the robot cleaner according to at least one embodiment of the present disclosure.

Lift-up refers to an operation of lifting the wet mop pad of the wet cleaning module 130 upward using a motor 133 to prevent the wet mop pad from coming into contact with the floor surface. The motor 133 may be embedded in the body of the robot cleaner 100 and connected to the pad attachment part 131 through a shaft or the like. The motor 133 may lift the wet cleaning module 130 upward under control of the processor 160.

The lift-up operation may be used in various situations. When the robot cleaner 100 performs dry cleaning, the wet cleaning module 130 may be lifted up to prevent the wet cleaning module 130 from coming in contact with the surface to be cleaned.

In addition, even while the robot cleaner 100 performs wet cleaning, the robot cleaner 100 may lift up the wet cleaning module 130 when the restricted region 20 is present on the traveling path and a situation occurs in which the robot cleaner 100 is unable to move by avoiding the restricted region 20.

A method for pass-through traveling the restricted region 20 by the robot cleaner 100 through the lift-up operation is described below in detail again.

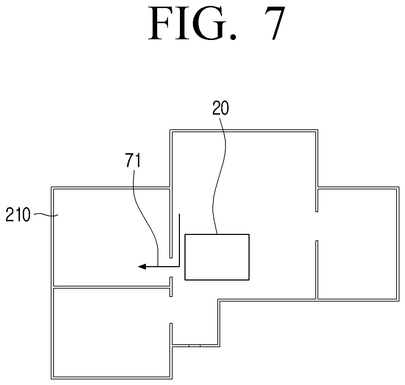

FIGS. 7, 8, and 9 are views illustrating a method for moving in the restricted region by the robot cleaner according to at least one embodiment of the present disclosure.

FIG. 7 illustrates a state in which the restricted region 20 is positioned at an entrance of a partial region 210 among the wet-cleaning possible regions.

When encountering the restricted region 20 while performing wet cleaning, the processor 160 may set a traveling path 71 to avoid the restricted region 20. Referring to FIG. 7, the restricted region 20 does not completely block the entrance, and the processor 160 may thus set the traveling path to enter the entrance while avoiding the restricted region 20. Accordingly, the processor 160 may perform wet cleaning for the partial region 210 without the lift-up operation.

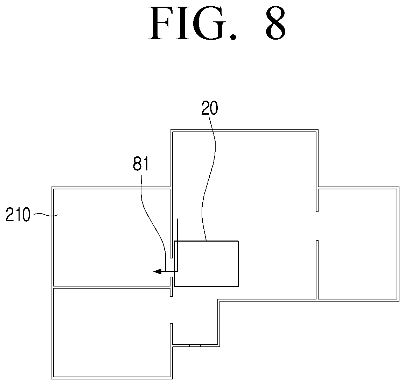

FIG. 8 illustrates a state in which a position of the restricted region 20 is changed to completely block the entrance of the partial region 210. The processor 160 may identify that the entrance of the partial region 210 is blocked on the basis of a map generated during dry cleaning. The processor 160 may set a traveling path 81 to pass through the restricted region 20 rather than to avoid the restricted region 20. In this situation, the processor 160 may transmit a control signal to the motor 133 and the driving unit 120 to lift up the wet cleaning module 130, thereby allowing the robot cleaner 100 to pass through the restricted region 20.

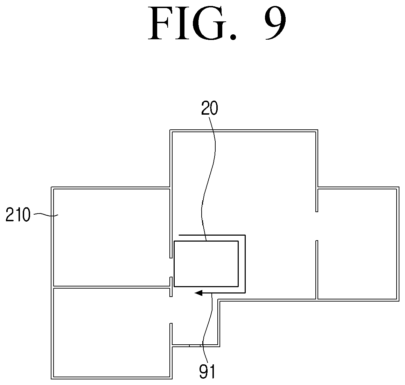

Similar to FIG. 8, FIG. 9 illustrates a state in which the restricted region 20 blocks the entrance of the partial region 210. Before passing through the restricted region 20, the processor 160 may identify whether the robot cleaner 100 is able to pass through the restricted region 20 in a lift-up state by using the sensor 140.

For example, when the restricted region 20 corresponds to a region in which a carpet is present on the floor surface, the processor 160 may obtain height information of carpet fibers present on the floor surface by using the sensor 140.

The robot cleaner 100 may detect a height of an obstacle such as a carpet present on the floor surface of the restricted region 20 by using the sensor 140 disposed at a lower portion thereof. The sensor 140 may include various types of sensors capable of sensing a height of an obstacle, such as an infrared sensor, an ultrasonic sensor, and a vision sensor. For example, the robot cleaner 100 may be equipped with the vision sensor to capture an image of the floor surface, and may identify a height of an obstacle present on the floor surface based on an analysis algorithm of the captured image. In another example, the robot cleaner 100 may be equipped with the infrared sensor to calculate a height of an obstacle based on a time taken for infrared rays reflected from an obstacle present on the floor surface to return.

The above description describes the restricted region 20 in which a carpet is present on the floor surface as an example, which is merely an example, and the restricted region 20 may include all cases in which objects formed of various materials that are not to become wet by the wet cleaning module 130, such as cushions, wires, or mats, are present on the floor surface.

When a carpet is present on the floor surface, the processor 160 may determine whether to pass through the restricted region 20 by comparing the height information of carpet fibers with height information of the pad in the lift-up state, because the pad needs to be moved upward to be higher than a height of the carpet fibers to prevent the pad from coming into contact with the carpet fibers.

For example, when the wet cleaning module 130 is in a state in which the wet cleaning module 130 is movable upward to 10mm from the floor surface through the lift-up operation, and a height of the carpet fibers is 8mm, the processor 160 may perform the lift-up operation to control the robot cleaner 100 to pass through the restricted region 20 in which a carpet is present on the floor surface.

On the other hand, when a height of the carpet fibers is 10mm or more, the robot cleaner 100 is unable to pass-through travel the restricted region 20 even through the lift-up operation, and the processor 160 may thus adjust a traveling path 91 to avoid the restricted region 20. As illustrated in FIG. 9, when the restricted region 20 completely blocks an entrance, the robot cleaner 100 is unable to pass through the restricted region 20 through the lift-up operation is not possible, and wet cleaning for the corresponding region 210 may thus become impossible. The processor 160 may output a notification sound through the speaker (not shown), or may output a notification message on the display (not shown). Alternatively, when the robot cleaner 100 further includes a communication unit connected to a user terminal device, the processor 160 may transmit the notification message to the user terminal device through the communication unit.

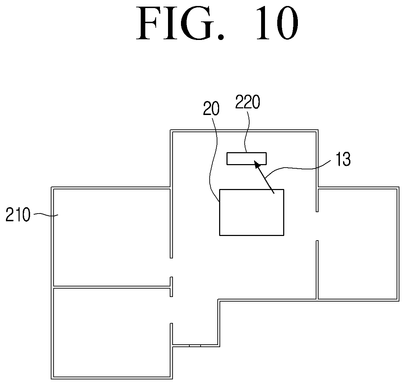

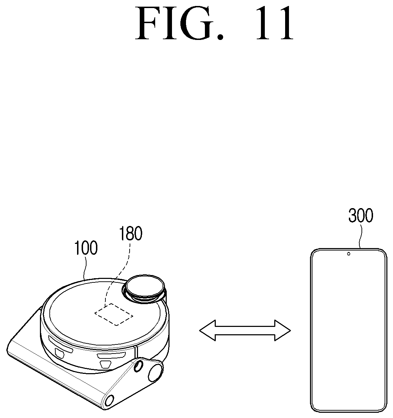

FIGS. 10 and 11 are views illustrating a method for setting a safe region by the robot cleaner according to at least one embodiment of the present disclosure. When the robot cleaner 100 enters the restricted region 20 in which wet cleaning is restricted while performing wet cleaning, the processor 160 may control the driving unit 120 to allow the robot cleaner 100 to escape to a safe region 220 set to be near the restricted region 20.

Here, the safe region 220 refers to a region in which wet cleaning is not restricted and which is located near the restricted region in which wet cleaning is restricted.

When the robot cleaner 100 operates normally, entry into the restricted region 20 may be prevented by operating the lower sensor 140 and utilizing the map stored in the memory 150. However, a case may occur in which the sensor 140 malfunctions and the robot cleaner 100 fails to detect the restricted region 20, or an external force is applied to the robot cleaner 100 to make the robot cleaner 100 enter the restricted region 20. In such a case, the processor 160 may identify that entry into the restricted region 20 occurs through the operation of the sensor 140 or the wet cleaning module 130. When entry into the restricted region 20 is identified, the processor 160 may identify the safe region 220 closest to the restricted region 20, set a path 13 along which the robot cleaner moves to the safe region 220, and control the driving unit to allow the robot cleaner to move along the path 13.

Here, the safe region 220 may be automatically set by the processor 160. The processor 160 may analyze a plurality of maps stored in the memory 150 to identify positions and areas of restricted regions 20 in the plurality of maps. The processor 160 may identify a region in which the restricted region is not positioned in each of the plurality of maps, and may set one of the identified regions as the safe region 220.

When the processor 160 determines that there is no region in which the restricted region is not positioned in the plurality of maps, the processor 160 may identify a region in which the restricted regions 20 are least distributed and may set the identified region as the safe region 220.

Meanwhile, the safe region 220 may be directly set by a user. When the robot cleaner 100 itself includes a display, the processor 160 may control the display to display a map. When the user touches a specific point on the map or designates a specific point by using a button provided on the robot cleaner 100, the processor 160 may set the designated point as the safe region 220. Alternatively, the map may be transmitted to an external terminal device to set the safe region on the terminal device.

Referring to FIG. 11, the robot cleaner 100 may perform communication with a user terminal 300 through a communication unit 180. The robot cleaner 100 may provide at least one of a plurality of maps stored in the memory 150 to the user terminal 300 through the communication unit 180. The user terminal 300 may display the provided map, and the user may directly set the safe region 220 on the map.

For example, the user may visually check a location where the restricted region 20 is positioned by viewing a plurality of maps displayed on the user terminal 300. The user may directly designate a region that does not correspond to the restricted region 20 and near the restricted region 20, and may set the designated region as the safe region 220.

In this case, when even a part of a region set as the safe region 220 by the user overlaps the restricted region 20, the user terminal 300 may display a notification window such as "please set the safe region in another location" on the user terminal 300.

When the user does not separately set the safe region 220 through the user terminal 300, a location at which the charging station of the robot cleaner 100 is positioned may be set as the safe region 220 by default.

In addition, the user may directly set the restricted region 20 through the user terminal 300. The user may check a plurality of maps displayed on the user terminal 300 to determine whether the robot cleaner 100 appropriately reflects information on an actual space onto the maps. For example, when a sensor included in the robot cleaner 100 malfunctions, a specific region in which wet cleaning is restricted may not be recognized as the restricted region 20 and may be reflected on the map as the wet-cleaning possible region and stored in the memory 150. In this case, the user may check the map obtained through communication between the user terminal 300 and the robot cleaner 100 on the display of the user terminal 300, and may directly designate a region that is not recognized as the restricted region 20 despite wet cleaning being restricted to set the designated region as the restricted region 20.

User manipulations for setting the restricted region 20 and the safe region 220 may be performed in various manners capable of providing the position or features of a specific region to the user terminal 300, such as touching a specific region on a map displayed on the user terminal 300 or providing information on a specific region by voice. For example, when a user carries the user terminal 300 equipped with a position sensor such as an ultra-wideband (UWB) sensor or a Bluetooth low energy (BLE) sensor, the user may move to a region that the user desires to set as the safe region 220 while carrying the user terminal 300, and provide a voice such as "set a location at which I am positioned as a safe region" to the user terminal 300. In this case, the user terminal 300 may identify a position of the user by using the position sensor and set the position as the safe region 220.

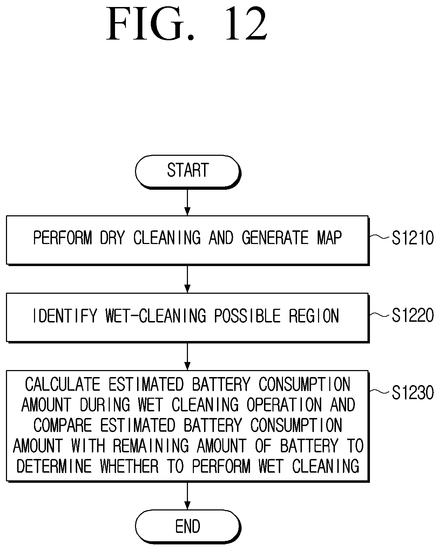

FIG. 12 is a flowchart illustrating a method for determining whether to perform wet cleaning by the robot cleaner according to at least one embodiment of the present disclosure.

Referring to FIG. 12, the robot cleaner may perform dry cleaning and generate the map on the basis of sensing values sensed by the sensor (S1210).

Next, the robot cleaner may identify the wet-cleaning possible region in the map (S1220).

Next, the robot cleaner may calculate the estimated battery consumption amount during the wet cleaning operation for the wet-cleaning possible region and compare the estimated battery consumption amount with the remaining amount of the battery to determine whether to perform wet cleaning (S1230).

According to an example, the robot cleaner may perform wet cleaning when the remaining amount of the battery is greater than the estimated battery consumption amount, and the robot cleaner may move to a charging station to perform battery charging when the remaining amount of the battery is less than the estimated battery consumption amount. The robot cleaner may then start wet cleaning when the battery is charged to at least the estimated battery consumption amount.

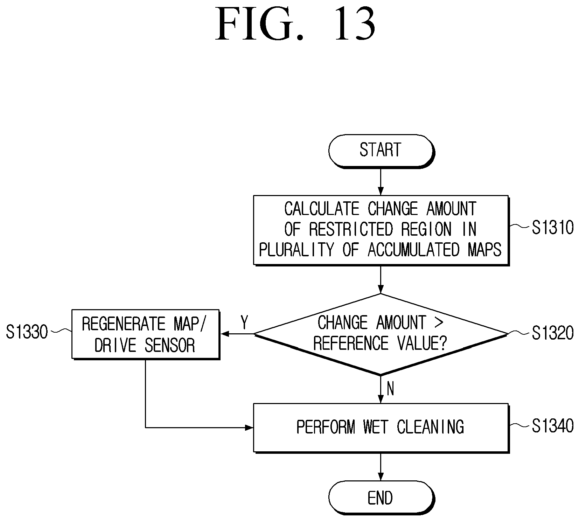

FIG. 13 is a flowchart illustrating a method for determining whether to use the stored map during the wet cleaning operation by the robot cleaner according to at least one embodiment of the present disclosure.

Referring to FIG. 13, the robot cleaner may calculate a position change amount of the restricted region in each of the plurality of accumulated maps (S1310).

Next, the robot cleaner may determine whether the change amount is greater than the reference value by comparing the calculated change amount with the reference value (S1320). The method for calculating the change amount and the method for comparing the change amount with the reference value are described above in detail, redundant descriptions thereof are thus omitted.

When the change amount is greater than the reference value, the robot cleaner may regenerate the map or start wet cleaning by using both the map and the sensing value sensed by the sensor in a state in which the sensor is driven (S1330 and S1340).

If the change amount is not greater than the reference value, the robot cleaner may start wet cleaning on the basis of the map (S1340). In this case, among the sensors mounted on the robot cleaner, the sensor for position recognition such as a LiDAR sensor may be activated and used, and other sensors for floor surface detection may be deactivated or intermittently activated and used.

The above-described restricted region may include cases in which objects formed of various materials that are not to become wet by the wet cleaning module, such as carpets, cushions, wires, or mats, are present on the floor surface.

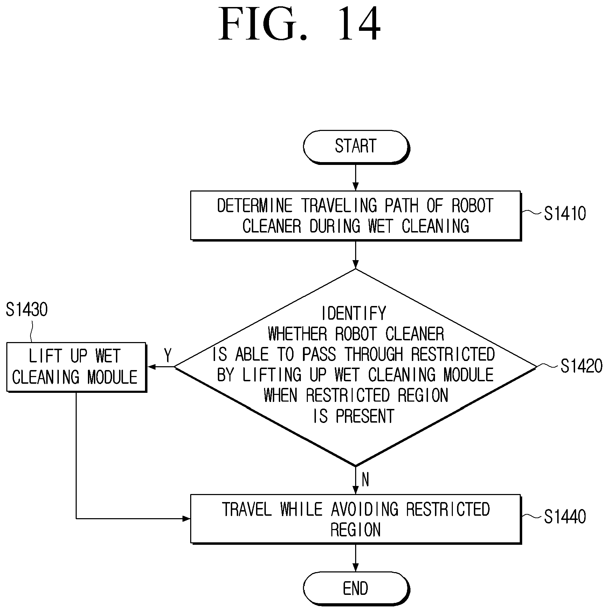

FIG. 14 is a flowchart illustrating a method for pass-through traveling in the restricted region by the robot cleaner according to at least one embodiment of the present disclosure.

Referring to FIG. 14, the robot cleaner may determine the traveling path along which the robot cleaner moves during wet cleaning (S1410).

Next, when the restricted region is present on the traveling path, the robot cleaner may identify whether the robot cleaner is able to pass through the restricted region in a state in which the wet cleaning module is lifted up (S1420).

If the robot cleaner is able to pass through the restricted region in the lifted-up state, the robot cleaner may lift up the wet cleaning module and passes through the restricted region (S1430).

If passing through the restricted region is not possible in the lifted-up state, the robot cleaner may travel while avoiding the restricted region (S1440).

A case in which the robot cleaner is able to pass through the restricted region in the lifted-up state includes a case in which a height of an obstacle present on the floor surface of the restricted region is less than a height to which the wet cleaning module is liftable through the lift-up operation.

A case in which the robot cleaner is unable to pass through the restricted region in the lifted-up state includes a case in which a height of an obstacle present on the floor surface of the restricted region is greater than a height to which the wet cleaning module is liftable through the lift-up operation.

Meanwhile, the methods according to the various embodiments of the present disclosure described above may be implemented in the form of an application capable of being installed on a conventional robot cleaner.

In addition, the methods according to the various embodiments of the present disclosure described above may be implemented only by software upgrade or hardware upgrade of the conventional robot cleaner.

In addition, the various embodiments of the present disclosure described above may be performed through an embedded server provided in a robot cleaner or at least one external server.

Meanwhile, according to an embodiment of the present disclosure, the various embodiments described above may be implemented by software including an instruction stored on a machine-readable storage medium readable by a machine (e.g., a computer). The machine may be a device that invokes the stored instruction from a storage medium, may be operated based on the invoked instruction, and may include the electronic apparatus according to the disclosed embodiments. When the instruction is executed by the processor, the processor may directly perform, or perform functions corresponding to the instructions by using other components under control of the processor. The instruction may include codes generated or executed by a compiler or an interpreter. The machine-readable storage medium may be provided in the form of a non-transitory storage medium. Here, the term "non-transitory" merely indicates that the storage medium is tangible without including a signal, and does not distinguish whether data are semi-permanently or temporarily stored in the storage medium.

In addition, according to an embodiment of the present disclosure, the method according to the various embodiments described above may be provided as a computer program product. The computer program product may be traded as a product between a seller and a buyer. The computer program product may be distributed in the form of a machine-readable storage medium (e.g., a compact disc read only memory (CD-ROM)) or online through an application store (e.g., Play Store^{™}). In the case of online distribution, at least part of the computer program product may be temporarily stored or generated in a storage medium such as the memory of a manufacturer server, an application store server, or a relay server.

In addition, each of the components (e.g., modules or programs) according to the various embodiments described above may include a single entity or a plurality of entities, and some of the corresponding sub-components described above may be omitted or other sub-components may be further included in the various embodiments. Alternatively or additionally, some of the components (e.g., the modules or the programs) may be integrated into one entity, and may perform functions performed by the respective corresponding components before integration in the same or similar manner. Operations performed by the modules, the programs or other components according to the various embodiments may be executed in a sequential manner, a parallel manner, an iterative manner or a heuristic manner, at least some of the operations may be performed in a different order or be omitted, or other operations may be added.

Although the preferred embodiments according to the present disclosure are illustrated and described as above, the present disclosure is not limited to the above-described specific embodiments, and may be variously modified by those skilled in the art to which the present disclosure pertains without departing from the scope of the present disclosure as claimed in the accompanying claims. These modifications should also be understood to fall within the spirit of the present disclosure.

## Claims

1. A robot cleaner comprising:
a driving unit configured to move a position of the robot cleaner;
a vacuum unit configured to vacuum foreign substances;
a wet cleaning module configured to perform wet cleaning;
at least one sensor;
a battery;
a memory; and
a processor,
wherein the processor is configured to:
control the driving unit and the vacuum unit to perform dry cleaning while moving within a space in which the robot cleaner is positioned;
generate a map for the space on the basis of a sensing value sensed by the at least one sensor during drying cleaning, and store the map in the memory;
identify a region in which wet cleaning is possible in the map, and calculate an estimated battery consumption amount when wet cleaning is performed for the identified region; and
compare the remaining amount of the battery with the estimated battery consumption amount to determine whether to perform wet cleaning.

2. The robot cleaner as claimed in claim 1, wherein the processor is configured to:
control the driving unit and the wet cleaning module to perform wet cleaning while moving the position of the robot cleaner within the space when the remaining amount of the battery is greater than the estimated battery consumption amount;
move the robot cleaner to a charging station to perform battery charging when the remaining amount of the battery is less than the estimated battery consumption amount; and
control the driving unit and the wet cleaning module to perform wet cleaning while moving the position of the robot cleaner within the space when the battery is charged to be equal to or greater than the estimated battery consumption amount.

3. The robot cleaner as claimed in claim 1 or claim 2, wherein the processor is configured to:
calculate a change amount of a restricted region in which wet cleaning is restricted within a plurality of maps previously generated for the space;
perform wet cleaning in a state in which a sensor configured to sense a floor surface among the at least one sensor is driven when the change amount is greater than a predetermined reference value; and
perform wet cleaning on the basis of the map when the change amount is less than the reference value.

4. The robot cleaner as claimed in claim 1, wherein the processor is configured to:
calculate a change amount of a restricted region in which wet cleaning is restricted within a plurality of maps previously generated for the space;
determine a validity period of the map based on the change amount; and
regenerate and update the map for the space in the memory when the validity period elapses.

5. The robot cleaner as claimed in claim 1, further comprising a motor configured to lift up the wet cleaning module,
wherein the processor is configured to:
control the motor to lift up the wet cleaning module while the robot cleaner passes through a restricted region when the restricted region in which wet cleaning is restricted is positioned on a traveling path of the robot cleaner.

6. The robot cleaner as claimed in claim 5, wherein the processor is configured to:
identify whether the robot cleaner is able to pass through the restricted region in a state in which the wet cleaning module is lifted up on the basis of the sensing value sensed by the at least one sensor; and
readjust the traveling path to avoid the restricted region when the robot cleaner is unable to pass through the restricted region.

7. The robot cleaner as claimed in claim 6, wherein the processor is configured to:
control the driving unit to move the robot cleaner to a predetermined safe region in the map when it is identified that the robot cleaner is positioned within the restricted region in a state in which the robot cleaner is unable to pass through the restricted region.

8. The robot cleaner as claimed in claim 7, wherein the processor is configured to:
cumulatively compare a plurality of maps previously generated for the space, identify a region in which the restricted region is not formed in the map as the safe region, and store information on the safe region in the memory.

9. The robot cleaner as claimed in claim 7, further comprising a communication unit,
wherein the processor is configured to:
receive a user input for setting the safe region in the map from a user terminal connected thereto through the communication unit; and
store information on the safe region in the memory based on the user input.

10. A cleaning method of a robot cleaner, the method comprising:
performing dry cleaning while moving within a space in which the robot cleaner is positioned, and generating a map for the space on the basis of a sensing value sensed by at least one sensor included in the robot cleaner;
identifying a region in which wet cleaning is possible in the map; and
calculating an estimated battery consumption amount when wet cleaning is performed for the identified region, and comparing the remaining amount of the battery with the estimated battery consumption amount to determine whether to perform wet cleaning.

11. The method as claimed in claim 10, further comprising:
performing wet cleaning when the remaining amount of the battery is greater than the estimated battery consumption amount; and
moving the robot cleaner to a charging station to perform battery charging when the remaining amount of the battery is less than the estimated battery consumption amount, and performing wet cleaning while moving a position of the robot cleaner within the space when the battery is charged to be equal to or greater than the estimated battery consumption amount.

12. The method as claimed in claim 10, further comprising:
calculating a change amount of a restricted region in which wet cleaning is restricted within a plurality of maps previously generated for the space;
performing wet cleaning on the basis of the map in a state in which a sensor configured to sense a floor surface among the at least one sensor is driven when the change amount is greater than a predetermined reference value; and
performing wet cleaning on the basis of the map when the change amount is less than the predetermined reference value.

13. The method as claimed in claim 10, further comprising:
calculating a change amount of a restricted region in which wet cleaning is restricted within a plurality of maps previously generated for the space; and
determining a validity period of the map based on the change amount.

14. The method as claimed in claim 10, further comprising:
lifting up a wet cleaning module when a restricted region in which wet cleaning is restricted is positioned on a traveling path of the robot cleaner; and
identifying whether the robot cleaner is able to pass through the restricted region in a state in which the wet cleaning module is lifted up on the basis of the sensing value sensed by the at least one sensor, and readjusting the traveling path to avoid the restricted region when the robot cleaner is unable to pass through the restricted region.

15. The method as claimed in claim 14, further comprising:
cumulatively comparing a plurality of maps previously generated for the space, identifying a region in which the restricted region is not formed in the map as a safe region, and storing the safe region; and
moving the robot cleaner to a position designated as the safe region when it is identified that the robot cleaner enters the restricted region in a state in which the robot cleaner is unable to pass through the restricted region.
